# EUROPEAN PATENT APPLICATION

(11) **EP 4 821 809 A1**
(43) Date of publication of application: **14.10.2026**
(21) Application number: 23960400.2
(22) Date of filing: 06.12.2023
(51) Int. Cl.: B64C 21/01, B63H 1/28

(54) **METHOD AND DEVICE FOR REACTIVE PROPULSION**

(71) Applicant: Konstantinov, Dragomir, 1404 Sofia (BG)
(72) Inventor: Konstantinov, Dragomir, 1404 Sofia (BG)
(74) Representative: Savova, Ekaterina Nikolaeva
(86) International application number: PCT/BG2023/000021
(87) International publication number: WO 2025/118041

(57) **Abstract**

The device for multiplied jet (reactive) propulsion does not contain moving parts and is arranged as a passive medium of built-in power devices creating jet propulsion, for example, a turbine, propeller, pump or their functional analogues. It consists of a fluid chamber 1 on the hull 2 of a water or air vehicle; built-in jet propulsion devices 3; outlet nozzles 4; inlet nozzles 5; and other elements. The device and method can be used as part of jet propulsion systems of water, air or vacuum devices, especially those with electric drive, for multiple improvement (three or more times) of their energy efficiency, using effects such as extended internal circulation of the fluid, directed high aerodynamic resistance and others. The device is applicable to all transport systems operating on a jet principle.

## Description

### Technical field

The device and method can be used for reactive (multiplied jet) propulsion of an build-in power device creating jet propulsion, for example a turbine, propeller, pump, or their functional analogues.

### State of the art

Jet, propeller and "bladeless" devices for creating an air stream (turbines, propellers, fans, drones, etc.) are known, as well as vehicles with sails for capturing wind energy. Devices and/or methods for multiplying jet propulsion of an build-in power unit are not known.

### Summary of the invention

The object of the present invention is to provide a device and method for multiplied jet propulsion of an build-in power device, creating jet propulsion, in a watercraft or aircraft, for example a turbine, propeller, pump or their functional analogues.

In one aspect, the device according to the invention consists of the following elements:
- a fluid chamber;
- one or more built-in jet propulsion devices directed in the direction of travel;
- the fluid chamber is connected to one or more outlet nozzles directed in a direction opposite to the direction of travel of the vehicle;
- the fluid chamber is connected to one or more inlet nozzles arranged in a plane different from and/or transverse to the plane of the outlet nozzles, and directed in the direction of travel of the vehicle;
- a mounting grid arranged on the hull of the watercraft or aircraft, the fluid chamber, one or more jet propulsion devices, the outlet nozzles and the inlet nozzles being fixed on the mounting grid;
- in one variant, the one or more jet propulsion devices are arranged at the inlet of one or more syringe manifolds with an annular nozzle and radial ducts, which are fixed to the mounting grid;
- in another embodiment, after one or more syringe manifolds on the mounting grid, one or more buffers with a drag coefficient higher than 1 are arranged;
- in another embodiment, after the buffers, a bow protector is arranged, fixed to the mounting grid;
- in another embodiment, the one or more jet propulsion devices are covered by a stern protector, also fixed to the mounting grid.

In another aspect, the invention relates to a method for multiplying jet propulsion of a vehicle with an build-in power device creating jet propulsion in a watercraft or aircraft, for example a turbine, propeller, pump or their functional analogues, which includes the following steps:
- step 1: upon activation of one or more build-in jet propulsion devices directed in the direction of travel of the vehicle, one or more jet propulsion devices send a fluid jet in the direction of travel, as a result of which one or more devices experience a counteraction, which counteraction is transmitted to the hull through the mounting grid;
- step 2: the fluid jet creates a low pressure area behind the one or more jet propulsion devices, which exerts on the adjacent rear part of the chamber or the stern protector a pull in the direction of travel, which pull is transmitted to the hull through the mounting grid;
- step 3: the fluid jet exerts pressure on the front of the chamber or on the bow protector, which is transmitted to the hull through the mounting grid;
- step 4: after the collision of the fluid jet with the front of the chamber or with the bow protector, it changes its direction and passes through one or more outlet nozzles, backwards relative to the direction of travel, thereby transmitting reactive acceleration to the hull;
- step 5: simultaneously with step 4, the low-pressure area behind one or more built-in devices is filled with fluid flows entering from the direction of travel through the inlet nozzles, which transmits reactive acceleration to the hull, with the fluid jets from one or more outlet nozzles and from the inlet nozzles not counteracting each other;
- as a result of the steps listed, the vehicle hull experiences a total propulsion force.

In one embodiment, step 4 further includes passing the fluid jet through an annular nozzle of one or more syringe manifolds, and then continuing in the form of a vertical ring/cylinder, which causes the fluid effects of inducement and entrainment, through which a cumulative increase in the fluid jet is achieved.

In another embodiment, step 4 further includes impinging the fluid jet with one or more buffers with an aerodynamic drag coefficient higher than 1, thereby causing a mechanical impulse, which is transmitted through the mounting grid to the housing.

### Description of figures

**Figure 1** is a top view/longitudinal section of a device according to the present invention with a fluid chamber, one outlet and two inlet nozzles.
**Figure 2** is a three-dimensional view/section of a device with a syringe manifold, a buffer, a bow protector and a stern protector.

### Examples

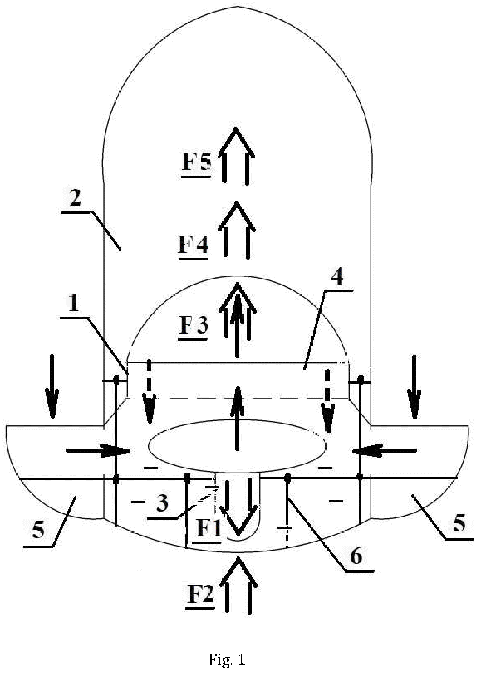

**Figure 1** shows a variant of the device according to the present invention. The device consists of the following elements: a fluid chamber (1) mounted on the hull (2) of a watercraft (ship); an build-in propeller ship engine (3) directed in the direction of travel; the fluid chamber (1) is connected to a bottom outlet nozzle (4) directed downwards, in a direction opposite to the direction of travel, and to a left and a right inlet stern nozzle (5) directed forward, in the direction of travel; all elements (1)-(5) are held in a fixed position by a mounting grid (6).

During its operation, with the activation of the engine (3) with power P, it sends a jet of water with a volume V in the direction of travel, and experiences a negative reaction -P, according to Newton's third law, which is transmitted to the hull (2) through the mounting grid (6).
**A)** $F 1 = - P$ At the same time, the water jet creates a low pressure area behind the motor (3), and exerts a pull on the adjacent rear part of the chamber (1) in the direction of movement P [1], which is transmitted to the housing (2) through the mounting grid (6).
**B)** $F 2 = P$ Continuing its forward movement, the water jet exerts a pressure P on the front of the chamber (1), according to Newton's third law, which is transmitted to the housing (2) through the mounting grid (6).
**C)** $F 3 = P$ After the collision, the water jet changes its direction and passes through the outlet nozzle (4), backwards relative to the direction of movement, and in doing so transmits to the housing (2) a reactive acceleration P, according to Newton's third law.
**D)** $F 4 = P$ At the same time, the low-pressure area behind the engine (3) is filled with water flows entering from the direction of travel through the inlet nozzles (5), thereby transmitting to the housing (2) a reactive acceleration P, according to Newton's third law. Due to their location in different horizontal planes, the water jets from the outlet nozzle (4) and the inlet nozzles (5) do not counteract each other.
**E)** $F 5 = P$ From the above findings A), B), C), D) and E) it follows that during the operation of the engine (3) with power P, the housing (2) experiences a total propulsion force F of magnitude 3P. The device continues its operation until the engine (3) is turned off.
**F)** ${F = Σ \left(F1-F5\right) = 3 P}_{¯}$

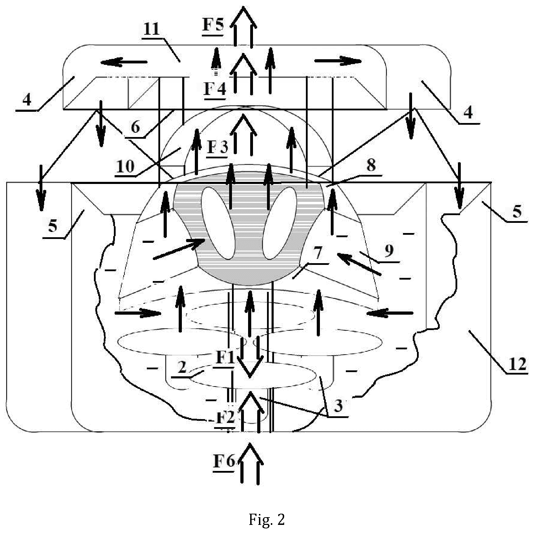

**Figure 2** shows another variant of the device. The device consists of the following elements: a hull (2) of an electric aircraft (drone quadcopter) with four built-in jet propulsion devices (3), in this case four propellers (3); all propellers (3) are located at the entrance to a syringe manifold (7) with an annular nozzle (8) and radial ducts (9); above the manifold (7) is a buffer (10) in the form of a semicircular flat panel; above the buffer (10) is a bow protector (11), the device has two built-in double-sided outlet nozzles (4), directed downwards and opposite to the direction of travel, and two built-in double-sided inlet nozzles (5), directed upwards, in the direction of travel; viewed from above, the two pairs of nozzles (4) and (5) are located transversely to each other; the propellers (3) are covered by a stern protector (12), with all elements (2)-(12) being held in a fixed position by a mounting grid (6).

During their operation, with the activation of the propellers (3) with power P, they send in the direction of movement (upwards) a jet of air with volume V, and experience a negative counteraction -P, which is transmitted to the hull (2) according to Newton's third law.
**A)** $F 1 = - P$ At the same time, the air jet creates a low pressure area under the propellers (3) [1], and exerts a lifting pull P on the stern protector, which is transmitted to the hull (2) through the mounting grid (6).
**B)** $F 2 = P$ Continuing its upward movement, the air jet passes through the annular nozzle (8) of the syringe manifold (7), and continues in the form of a vertical ring/cylinder, which causes the fluid effects of inducement and entrainment effects, and through them increases the air jet to 15 times or more compared to the initial one [2]. This jet meets the buffer (10), which due to its shape has an aerodynamic drag coefficient of 2.3 [3], and thus experiences a lifting force of 34.5P (=15 x 2.3), according to Newton's third law, which is transmitted to the housing (2) through the mounting grid (6).
**C)** $F 3 = 34.5 P$ Continuing its upward movement, the cumulative air jet reaches the bow protector (11) and transmits to it a lifting force of 15P, according to Newton's third law, which is transmitted to the hull (2) through the mounting grid (6).
**D)** $F 4 = 15 P$ After the collision, the air jet changes direction and passes through the two outlet nozzles (4), directed downwards, or backwards relative to the direction of travel, and in doing so transmits to the hull (2) a reactive acceleration of 15P, according to Newton's third law.
**E)** $F 5 = 15 P$ At the same time, the low-pressure area under the four propellers (3) and under the injector manifold (7) is filled with air flows entering from above, from the direction of travel, through the pair of inlet nozzles (5) and through the radial ducts (9), thereby transmitting to the housing (2) a reactive acceleration of 15P, according to Newton's third law. Due to their location in different vertical planes, the air jets from the pair of outlet nozzles (4) and from the pair of inlet nozzles (5) do not counteract each other.
**F)** $F 6 = 15 P$ From the above findings A), B), C), D), E) and F) it follows that during the operation of the engine (3) with power P, the hull (2) experiences a total lifting force F of magnitude 79.5P. The device continues its operation until the propellers (3) are turned off.
**D)** ${F = Σ \left(F1-F6\right) = 79.5 P}_{¯}$

### Use of the invention

The device and method can be used as part of the systems for reactive propulsion of water, air or vacuum devices, especially those with electric drive, for multiple improvement (three and more times) of their energy efficiency, using effects such as extended internal circulation of the fluid, directed high aerodynamic resistance, etc. The device is applicable to all transport systems operating on a reactive principle.

### List of reference numbers

1. Fluid chamber
2. Hull of a watercraft or aircraft
3. Jet propulsion device/engine
4. Outlet nozzle
5. Inlet nozzle
6. Mounting grid
7. Syringe manifold
8. Annular nozzle
9. Radial ducts
10. Buffer
11. Bow protector
12. Stern protector

### References

1. "Propeller thrust explained by Newtonian physics", Nicholas Landel-Mills, pp. 42 onyard; Pre-Print, April 2021.
2. "Dyson claims that the output of airflow is increased 15 times more than that taken in through the pedestal's motor". "How does the Dyson Air Multiplier works?", "Jameco Electronics" Inc.
**3.** "Drag coefficients of 2-dimensional shapes", Fig 33, p. 3-17, "Fluid Dynamic Drag", Sighard F. Hoerner, 1965.

## Claims

1. Device for multiple jet propulsion of an build-in power device, creating jet propulsion, in a watercraft or aircraft, for example a turbine, propeller, pump or their functional analogues,
**characterized in that it consists of the following elements:**
- a fluid chamber (1);
- one or more built-in jet propulsion devices (3) directed in the direction of travel;
- the fluid chamber (1) is connected to one or more outlet nozzles (4) directed in a direction opposite to the direction of travel of the vehicle;
- the fluid chamber (1) is connected to one or more inlet nozzles (5) arranged in a plane different from and/or transverse to the plane of the outlet nozzles (4), and directed in the direction of travel of the vehicle;
- a mounting grid (6) arranged on the hull (2) of the watercraft or aircraft, the fluid chamber (1), one or more jet propulsion devices (3), the outlet nozzles (4) and the inlet nozzles (5) being fixed on the mounting grid (6).

2. Device according to claim 1,
**characterized in that**
the one or more jet propulsion devices (3) are arranged at the inlet of one or more syringe manifolds (7) with an annular nozzle (8) and radial ducts (9), which are fixed to the mounting grid (6).

3. Device according to claim 1 or claim 2,
**characterized in that**
- after one or more syringe manifolds (7) on the mounting grid (6), one or more buffers (10) with a drag coefficient higher than 1 are arranged.

4. Device according to claims 1-3,
**characterized in that**
- after the buffers (10), a bow protector (11) is arranged, fixed to the mounting grid (6).

5. Device according to claims 1-4,
**characterized in that**
- the one or more jet propulsion devices (3) are covered by a stern protector (12), fixed to the mounting grid.

6. Method for multiplying jet propulsion of a vehicle with an build-in power device creating jet propulsion in a watercraft or aircraft, for example a turbine, propeller, pump or their functional analogues, by means of a device according to claims 1 to 5,
**characterized in that**
it includes the following steps:
- step 1: upon activation of one or more build-in jet propulsion devices (3) directed in the direction of travel of the vehicle, one or more jet propulsion devices (3) send a fluid jet in the direction of travel, as a result of which one or more devices (3) experience a counteraction, which counteraction is transmitted to the hull (2) through the mounting grid (6);
- step 2: the fluid jet creates a low pressure area behind the one or more jet propulsion devices (3), which exerts on the adjacent rear part of the chamber (1) or the stern protector (12) a pull in the direction of travel, which pull is transmitted to the hull (2) through the mounting grid (6);
- step 3: the fluid jet exerts pressure on the front of the chamber (1) or on the bow protector (11), which is transmitted to the hull (2) through the mounting grid (6);
- step 4: after the collision of the fluid jet with the front of the chamber (1) or with the bow protector (11), it changes its direction and passes through one or more outlet nozzles (4), backwards relative to the direction of travel, thereby transmitting reactive acceleration to the hull (2);
- step 5: simultaneously with step 4, the low-pressure area behind one or more built-in devices (3) is filled with fluid flows entering from the direction of travel through the inlet nozzles (5), which transmits reactive acceleration to the hull (2), with the fluid jets from one or more outlet nozzles (4) and from the inlet nozzles (5) not counteracting each other;
- as a result of the steps listed, the vehicle hull experiences a total propulsion force.

7. Method according to claim 6,
**characterized in that**
- step 4 further includes passing the fluid jet through an annular nozzle (8) of one or more syringe manifolds (7), and then continuing in the form of a vertical ring/cylinder, which causes the fluid effects of inducement and entrainment, through which a cumulative increase in the fluid jet is achieved.

8. Method according to claims 6 and 7,
**characterized in that**
- step 4 further includes impinging the fluid jet with one or more buffers (10) with an aerodynamic drag coefficient higher than 1, thereby causing a mechanical impulse, which is transmitted through the mounting grid (6) to the hull (2).
